# EUROPEAN PATENT APPLICATION

(11) **EP 3 310 011 A1**
(43) Date of publication of application: **18.04.2018**
(21) Application number: 16858767.3
(22) Date of filing: 25.07.2016
(51) Int. Cl.: H04L 12/803

(54) **LOAD SHARING METHOD AND RELATED APPARATUS**

(30) Priority: 30.10.2015 CN 201510727945
(71) Applicant: Huawei Technologies Co., Ltd., Longgang District Shenzhen, Guangdong 518129 (CN)
(72) Inventor: HAO, Weiguo, Shenzhen Guangdong 518129 (CN); ZHU, Yongfei, Shenzhen Guangdong 518129 (CN)
(74) Representative: Maiwald Patentanwalts GmbH
(86) International application number: PCT/CN2016/091579
(87) International publication number: WO 2017/071328

(57) **Abstract**

This application discloses a load method, used to implement load balancing in a network. The method according to embodiments of this application includes: obtaining, by a first PE device, a first device identifier of the first PE device, and obtaining an ESI that is of a target NVE device and is corresponding to the first device identifier and a VN ID that is of a target VN accessed by the target NVE device and is corresponding to the first device identifier; receiving, by the first PE device, a message from a second PE device, where the message carries a second device identifier of the second PE device, and the target ESI and the VN ID of the target VN that are corresponding to the second device identifier; and determining, by the first PE device according to the first device identifier, the second device identifier, the target ESI, and the VN ID of the target VN, whether the first PE device is a DF of the target NVE device in the target VN. The embodiments of this application further provide a related load balancing apparatus.

## Description

This application claims priority to Chinese Patent Application No. 201510727945.8, filed with the Chinese Patent Office on October 30, 2015 and entitled "LOAD BALANCING METHOD AND RELATED APPARATUS", which is incorporated herein by reference in its entirety.

### TECHNICAL FIELD

This application relates to the communications field, and in particular, to a load balancing method and a related apparatus.

### BACKGROUND

A virtual network (VN, Virtual Network) is a computer network that includes at least some virtual network links. A virtual network link is implemented by means of network virtualization between two computing devices without a physical link. An Ethernet virtual private network (EVPN, Ethernet virtual private network) is a layer 2 virtual private network (VPN, virtual private network) technology. Unknown unicast packet flooding can be reduced in the VPN by using the EVPN, and a network bandwidth can be saved.

In an existing technology, a provider edge (PE, Provider Edge) router device in the EVPN is usually connected to a network virtualization edge (NVE, Network Virtualization Edge) device in a VN, so that two or more VNs are connected by using the EVPN. In an internetwork between the VN and the EVPN, to avoid that data traffic from the NVE device forms a loop flow in the network, usually a designated forwarder (DF, Designated Forwarder) is elected from multiple PE devices in the EVPN for each VN accessed by the NVE device. The PE device elected as the DF can bidirectionally propagate data traffic corresponding to the VN, and another PE device cannot send data traffic on a network side to the VN. Therefore, this avoids formation of a data traffic loop flow.

However, one VN may be distributed to multiple NVE devices, some VNs may be distributed to a relatively large quantity of NVE devices, and some VNs may be distributed to a relatively small quantity of NVE devices or even only one NVE device. Therefore, if a DF is elected from PE devices based on the VN, quantities of NVE devices connected to the PE devices have a large difference, load shared by the PE devices is imbalanced, and overall performance of the internetwork between the VN and the EVPN is further affected.

### SUMMARY

Embodiments of this application provide a load balancing method, used to implement load balancing of PE devices in an internetwork between a VN and an EVPN. The embodiments of this application further provide a related load balancing apparatus.

A first aspect of the embodiments of this application provides a load balancing method, applied to an internetwork between a virtual network VN and an Ethernet virtual private network EVPN, where the internetwork includes a first provider edge PE device, a second PE device, and a target network virtualization edge NVE device, the target NVE device is separately connected to the first PE device and the second PE device, the target NVE device belongs to the VN, the first PE device and the second PE device belong to the EVPN, and the method includes:
obtaining, by the first PE device, a first device identifier of the first PE device, and obtaining a target Ethernet segment identifier ESI that is of the target NVE device and is corresponding to the first device identifier and a virtual network identifier VN ID that is of a target VN accessed by the target NVE device and is corresponding to the first device identifier, where the target ESI is used to uniquely identify the target NVE device;
receiving, by the first PE device, a message from the second PE device, where the message from the second PE device carries a second device identifier of the second PE device, and the target ESI and the VN ID of the target VN that are corresponding to the second device identifier; and
determining, by the first PE device according to the first device identifier, the second device identifier, the target ESI, and the VN ID of the target VN, whether the first PE device is a designated forwarder DF of the target NVE device in the target VN, where the DF is configured to forward a broadcast, an unknown unicast, or a multicast BUM packet received from an EVPN network side to the NVE device.

With reference to the first aspect of the embodiments of this application, in a first implementation of the first aspect of the embodiments of this application, the obtaining an ESI that is of the target NVE device and is corresponding to the first device identifier includes:
configuring the target ESI for the target NVE device; or
obtaining an Internet Protocol IP address of the target NVE device and generating the target ESI of the target NVE device according to the IP address of the target NVE device.

With reference to the first aspect or the first implementation of the first aspect of the embodiments of this application, in a second implementation of the first aspect of the embodiments of this application, before the determining, by the first PE device according to the first device identifier, the second device identifier, the target ESI, and the VN ID of the target VN, whether the first PE device is a DF of the target NVE device in the target VN, the method further includes:
determining, by the first PE device according to a fact that the target ESI and the target VN ID that are corresponding to the first device identifier are the same as the target ESI and the target VN ID that are corresponding to the second device identifier, that both the first PE device and the second PE device are connected to the target NVE in the target VN.

With reference to any one of the first aspect or the first to the second implementations of the first aspect of the embodiments of this application, in a third implementation of the first aspect of the embodiments of this application, the determining, by the first PE device according to the first device identifier, the second device identifier, the target ESI, and the VN ID of the target VN, whether the first PE device is a DF of the target NVE device in the target VN includes:
evenly allocating, by the first PE device, the first PE device from the first PE device and the second PE device as the DF of the target NVE device in the target VN.

With reference to the third implementation of the first aspect of the embodiments of this application, in a fourth implementation of the first aspect of the embodiments of this application, the evenly allocating, by the first PE device, the first PE device from the first PE device and the second PE device as the DF of the target NVE device in the target VN includes:
calculating, by the first PE device, a value of i according to a formula i = (VN ID)mod(N), where N represents a quantity of PE devices that perform load balancing for the target NVE device in the target VN, N is an integer not less than 2, i represents a number of any device in the N PE devices, the N PE devices are numbered from 0 to N-1, and mod represents a modulo operator; and
in case i obtained by means of calculation is equal to a number of the first PE device, determining, by the first PE device, that the first PE device is the DF of the target NVE device in the target VN;
in case i obtained by means of calculation is not equal to a number of the first PE device, determining, by the first PE device, that the first PE device is not the DF of the target NVE device in the target VN.

With reference to the fourth implementation of the first aspect of the embodiments of this application, in a fifth implementation of the first aspect of the embodiments of this application, that the N PE devices are numbered from 0 to N-1 includes:
numbering, by the first PE device, the N PE devices from 0 to N-1 in ascending or descending order of device identifiers of the N PE devices.

With reference to any one of the first aspect or the first to the fifth implementations of the first aspect of the embodiments of this application, in a sixth implementation of the first aspect of the embodiments of this application, the method further includes:
receiving, by the first PE device, a BUM packet from the EVPN side, where the BUM packet includes the target ESI and the VN ID of the target VN; and
in case the first PE device determines that the first PE device is the DF of the target NVE device in the target VN, forwarding, by the first PE device, the BUM packet to the target NVE device;
in case the first PE device determines that the first PE device is not the DF of the target NVE device in the target VN, discarding, by the first PE device, the BUM packet.

With reference to any one of the first aspect or the first to the sixth implementations of the first aspect of the embodiments of this application, in a seventh implementation of the first aspect of the embodiments of this application, the internetwork further includes a third PE device, the target NVE device is connected to the third PE device, the third PE device belongs to the EVPN network, and the method further includes:
receiving, by the first PE device, a message from the third PE device, where the message from the third PE device carries a third device identifier of the third PE device, and the ESI and the VN ID that are corresponding to the third device identifier; and
determining, by the first PE device according to the first device identifier, the second device identifier, the third device identifier, the ESI, and the VN ID, whether the first PE device itself is the designated forwarder DF of the target NVE device in the VN.

With reference to the seventh implementation of the first aspect of the embodiments of this application, in an eighth implementation of the first aspect of the embodiments of this application, before the determining, by the first PE device according to the first device identifier, the second device identifier, the third device identifier, the ESI, and the VN ID, whether the first PE device itself is the designated forwarder DF of the target NVE device in the VN, the method further includes:
determining, by the first PE device according to a fact that the ESI and the VN ID that are corresponding to the first device identifier, the ESI and the VN ID that are corresponding to the second device identifier, and the ESI and the VN ID that are corresponding to the third device identifier are the same, that the first PE device, the second PE device, and the third PE device are connected to the same NVE and VN.

With reference to the eighth implementation of the first aspect of the embodiments of this application, in a ninth implementation of the first aspect of the embodiments of this application, the determining, by the first PE device according to the first device identifier, the second device identifier, the third device identifier, the ESI, and the VN ID, whether the first PE device itself is the designated forwarder DF of the target NVE device in the VN includes:
evenly allocating, by the first PE device, the first PE device from the first PE device, the second PE device, and the third PE device as the DF of the target NVE device.

A second aspect of the embodiments of this application provides a load balancing apparatus, applied to an internetwork between a virtual network VN and an Ethernet virtual private network EVPN, where the internetwork includes a first provider edge PE device, a second PE device, and a target network virtualization edge NVE device, the target NVE device is separately connected to the first PE device and the second PE device, the target NVE device belongs to the VN, the first PE device and the second PE device belong to the EVPN, the apparatus is applicable to the first PE device, and the apparatus includes:
an information obtaining module, configured to obtain a first device identifier of the first PE device, and obtain a target Ethernet segment identifier ESI that is of the target NVE device and is corresponding to the first device identifier and a virtual network identifier VN ID that is of a target VN accessed by the target NVE device and is corresponding to the first device identifier, where the target ESI is used to uniquely identify the target NVE device;
a message receiving module, configured to receive a message from the second PE device, where the message from the second PE device carries a second device identifier of the second PE device, and the target ESI and the VN ID of the target VN that are corresponding to the second device identifier; and
a DF selection module, configured to determine, according to the first device identifier, the second device identifier, the target ESI, and the VN ID of the target VN, whether the first PE device is a designated forwarder DF of the target NVE device in the target VN, where the DF is configured to forward a broadcast, an unknown unicast, or a multicast BUM packet received from an EVPN network side to the NVE device.

With reference to the second aspect of the embodiments of this application, in a first implementation of the second aspect of the embodiments of this application, the information obtaining module is further configured to:
configure the target ESI for the target NVE device; or
obtain an Internet Protocol IP address of the target NVE device and generate the target ESI of the target NVE device according to the IP address of the target NVE device.

With reference to the second aspect or the first implementation of the second aspect of the embodiments of this application, in a second implementation of the second aspect of the embodiments of this application, the DF selection module is further configured to:
determine, according to a fact that the target ESI and the target VN ID that are corresponding to the first device identifier are the same as the target ESI and the target VN ID that are corresponding to the second device identifier, that both the first PE device and the second PE device are connected to the target NVE in the target VN.

With reference to any one of the second aspect or the first to the second implementations of the second aspect of the embodiments of this application, in a third implementation of the second aspect of the embodiments of this application, the DF selection module is further configured to:
evenly allocate the first PE device from the first PE device and the second PE device as the DF of the target NVE device in the target VN.

With reference to the third implementation of the second aspect of the embodiments of this application, in a fourth implementation of the second aspect of the embodiments of this application, the DF selection module is further configured to:
calculate a value of i according to a formula i = (VN ID)mod(N), where N represents a quantity of PE devices that perform load balancing for the target NVE device in the target VN, N is an integer not less than 2, i represents a number of any device in the N PE devices, the N PE devices are numbered from 0 to N-1, and mod represents a modulo operator; and
in case i obtained by means of calculation is equal to a number of the first PE device, determine that the first PE device is the DF of the target NVE device in the target VN;
in case i obtained by means of calculation is not equal to a number of the first PE device, determine that the first PE device is not the DF of the target NVE device in the target VN.

With reference to the fourth implementation of the second aspect of the embodiments of this application, in a fifth implementation of the second aspect of the embodiments of this application, the DF selection module is further configured to:
number the N PE devices from 0 to N-1 in ascending or descending order of device identifiers of the N PE devices.

With reference to any one of the second aspect or the first to the fifth implementations of the second aspect of the embodiments of this application, in a sixth implementation of the second aspect of the embodiments of this application, the message receiving module is further configured to receive a BUM packet from the EVPN side, where the BUM packet includes the target ESI and the VN ID of the target VN; and
the apparatus further includes a packet processing module, configured to: if the first PE device is the DF of the target NVE device in the target VN, forward the BUM packet to the target NVE device; or if the first PE device is not the DF of the target NVE device in the target VN, discard the BUM packet.

With reference to any one of the second aspect or the first to the sixth implementations of the second aspect of the embodiments of this application, in a seventh implementation of the second aspect of the embodiments of this application, the internetwork further includes a third PE device, the target NVE device is connected to the third PE device, and the third PE device belongs to the EVPN network;
the message receiving module is further configured to receive a message from the third PE device, where the message from the third PE device carries a third device identifier of the third PE device, and the ESI and the VN ID that are corresponding to the third device identifier; and
the DF selection module is further configured to determine, according to the first device identifier, the second device identifier, the third device identifier, the ESI, and the VN ID, whether the DF selection module itself is the designated forwarder DF of the target NVE device in the VN.

With reference to the seventh implementation of the second aspect of the embodiments of this application, in an eighth implementation of the second aspect of the embodiments of this application, the DF selection module is further configured to determine, according to a fact that the ESI and the VN ID that are corresponding to the first device identifier, the ESI and the VN ID that are corresponding to the second device identifier, and the ESI and the VN ID that are corresponding to the third device identifier are the same, that the first PE device, the second PE device, and the third PE device are connected to the same NVE and VN.

With reference to the eighth implementation of the second aspect of the embodiments of this application, in a ninth implementation of the second aspect of the embodiments of this application, the DF selection module is further configured to evenly allocate the first PE device from the first PE device, the second PE device, and the third PE device as the DF of the target NVE device.

According to the load balancing method provided in the embodiments of this application, the first PE device obtains the first device identifier of the first PE device, the target ESI that is of the target NVE device and is corresponding to the first device identifier, and the VN ID that is of the target VN accessed by the target NVE device and is corresponding to the first device identifier. The first PE device further obtains, from the second PE device, the second device identifier of the second PE device, the target ESI that is of the target NVE device and is corresponding to the second device identifier, and the VN ID that is of the target VN accessed by the target NVE device and is corresponding to the second device identifier. The same target ESI and VN ID of the target VN are obtained from the second PE device. Therefore, the first PE device determines, according to the first device identifier, the second device identifier, the target ESI, and the VN ID of the target VN, whether the first PE device is the DF of the target NVE device in the target VN. Different from the prior art in which a DF is selected merely based on a VN granularity, in the embodiments of this application, the DF is selected for the NVE device that is in the VN and is connected to multiple PE devices, so that the DF is selected based on an NVE+VN granularity. In this way, a VN accessed by one NVE device is evenly shared to multiple PE devices, so that load shared by each PE device is more balanced.

### BRIEF DESCRIPTION OF DRAWINGS

FIG. 1 is a schematic structural diagram of an internetwork between a VN and an EVPN;
FIG. 2 is a flowchart of an embodiment of a load balancing method according to an embodiment of this application;
FIG. 3 is a structural diagram of an embodiment of a load balancing apparatus according to an embodiment of this application; and
FIG. 4 is another structural diagram of an embodiment of a load balancing apparatus according to an embodiment of this application.

### DESCRIPTION OF EMBODIMENTS

Embodiments of this application provide a load balancing method, used to implement load balancing of PE devices in an internetwork between a VN and an EVPN. The embodiments of this application further provide a related load balancing apparatus, and these are separately described below.

The VN is a computer network that includes at least some virtual network links. A virtual network link is implemented by means of network virtualization between two computing devices without a physical link. A packet in the VN may be encapsulated in a virtual extensible LAN (vxlan, virtual Extensible LAN) manner, a network virtualization overlay 3 (NVO3, Network Virtualization Overlayer 3) manner, or the like. The NVO3 technology is a technology for implementing network virtualization. With the technology, a physical network can be virtualized by using an NVE device and can be shared by different tenant end systems (TES, Tenant End System). The EVPN is a layer 2 virtual private network technology. Unknown unicast packet flooding can be reduced in a VPN network by using an EVPN protocol, and a network bandwidth can be saved.

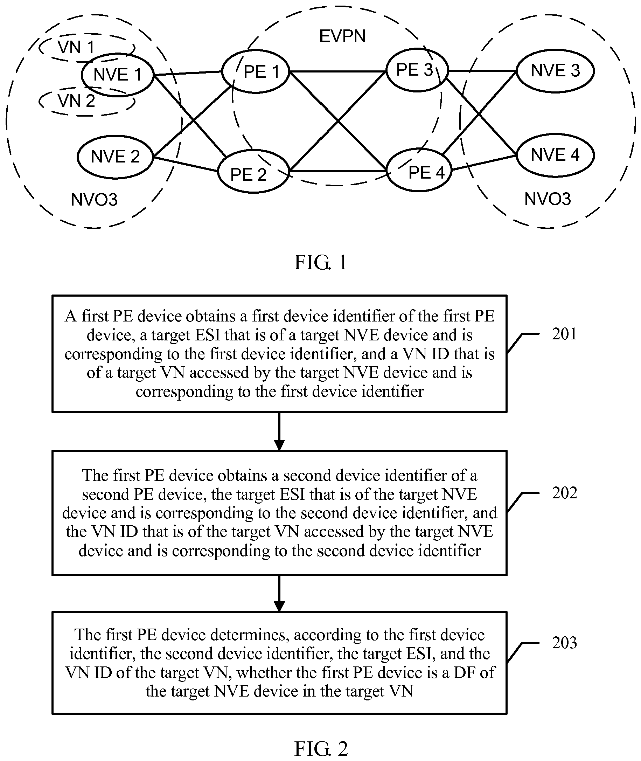

Reference may be made to FIG. 1 for a schematic diagram of a basic structure of an internetwork between a VN and an EVPN. A PE device belongs to the EVPN network. Each PE device is uniquely identified by a device identifier. The device identifier may be an Internet Protocol (IP, Internet Protocol) address of the PE device or may be another form, and this is not limited herein. An NVE device belongs to the VN network, each NVE device is uniquely identified by an Ethernet segment identifier (ESI, Ethernet Segment Identifier), and each VN is uniquely identified by a virtual network identifier (VN ID). The PE device is connected to the NVE device, so that the VN is connected to the EVPN. A specific interconnection relationship may be stored by the PE device or another device itself in the network, and may be specifically stored in a form of a mapping table. For example, if a mapping table is stored in a PE device, and the mapping table records that a device identifier 1 is corresponding to an ESI 1 and a VN ID 1, it indicates that a PE device identified by the device identifier 1 is interconnected to an NVE device identified by the ESI 1, and the NVE device accesses a VN identified by the VN ID 1. One NVE device in the VN may be connected to multiple PE devices, and each NVE device may access one or more VNs. A PE device may receive a broadcast (Broadcast) packet, an unknown unicast (Unknown Unicast) packet, or a multicast (Multicast) packet (the broadcast, unknown unicast, and multicast packets are referred to as a BUM packet in the following) sent by a local NVE device (that is, the NVE device connected to the PE device), and send the BUM packet to the EVPN; or the PE device may receive a BUM packet from the EVPN and send the BUM packet to the local NVE device.

On a basis of the internetwork shown in FIG. 1, an embodiment of this application provides a load balancing method, and reference may be made to FIG. 2 for a basic procedure of the method. The method includes the following steps.
201. A first PE device obtains a first device identifier of the first PE device, a target ESI that is of a target NVE device and is corresponding to the first device identifier, and a VN ID that is of a target VN accessed by the target NVE device and is corresponding to the first device identifier.

In this embodiment of this application, an EVPN includes the first PE device and a second PE device, a VN includes the target NVE device, and the target NVE device is separately connected to the first PE device and the second PE device. The target NVE device accesses one or more VNs including the target VN. The target NVE device may be directly connected to both the first PE device and the second PE device, or may be indirectly connected to both the first PE device and the second PE device by using a switch or another network element. This belongs to a related scope described in this embodiment of this application, provided that the target NVE device can exchange a data packet with the first PE device and the second PE device.

In this step, the first PE device obtains the first device identifier of the first PE device. The first device identifier is used to uniquely identify the first PE device, the first device identifier may be specifically an IP address of the first PE device or another form, and this is not limited herein. The target NVE device is connected to the first PE device. Therefore, the first device identifier of the first PE device is corresponding to the target ESI of the target NVE device and the VN ID of the target VN accessed by the target NVE device. In this step, the first PE device further obtains the target ESI and the VN ID of the target VN that are corresponding to the first device identifier.

The target NVE may access one target VN or at least two target NVs, and this is not limited herein.
202. The first PE device obtains a second device identifier of a second PE device, the target ESI that is of the target NVE device and is corresponding to the second device identifier, and the VN ID that is of the target VN accessed by the target NVE device and is corresponding to the second device identifier.

The target NVE device is also connected to the second PE device. Therefore, the second device identifier of the second PE device is also corresponding to the target ESI of the target NVE device and the VN ID of the target VN accessed by the target NVE device. In this step, the first PE device receives a message from the second PE device and obtains the second device identifier of the second PE device, the target ESI, and the VN ID of the target VN that are carried in the message.
203. The first PE device determines, according to the first device identifier, the second device identifier, the target ESI, and the VN ID of the target VN, whether the first PE device is a DF of the target NVE device in the target VN.

In step 202, after receiving the message from the second PE device, the first PE device obtains, from the message, the target ESI and the VN ID of the target VN that are the same as those in step 201. In this case, the first PE device can learn that the target NVE device is connected to both the first PE device and the second PE device. The target NVE device is connected to multiple PE devices. Therefore, a DF needs to be separately selected in the multiple PE devices for the VN accessed by the target NVE device.

In this embodiment, a method for selecting a DF is specifically described merely from a perspective of the first PE device: The first PE device determines, according to the first device identifier, the second device identifier, the target ESI, and the VN ID of the target VN, whether the first PE device itself is a DF of the target NVE device in the target VN. A specific determining method is described in detail in the following embodiment, and is not limited herein. After each PE device connected to the target NVE device determines, like the first PE device, whether the PE device itself is a DF of the target NVE device in the target VN, selecting a DF of the target NVE device in the target VN from the multiple PE devices connected to the target NVE device is implemented.

According to the load balancing method provided in this embodiment, the first PE device obtains the first device identifier of the first PE device, the target ESI that is of the target NVE device and is corresponding to the first device identifier, and the VN ID that is of the target VN accessed by the target NVE device and is corresponding to the first device identifier. The first PE device further obtains, from the second PE device, the second device identifier of the second PE device, the target ESI that is of the target NVE device and is corresponding to the second device identifier, and the VN ID that is of the target VN accessed by the target NVE device and is corresponding to the second device identifier. Because the same target ESI and VN ID of the target VN are obtained from the second PE device, the first PE device determines, according to the first device identifier, the second device identifier, the target ESI, and the VN ID of the target VN, whether the first PE device is the DF of the target NVE device in the target VN. Different from the prior art in which a DF is selected merely based on a VN granularity, in this embodiment, the DF is selected for the NVE device connected to multiple PE devices in the VN, so that the DF is selected based on an NVE+VN granularity. In this way, a VN accessed by one NVE device is evenly shared to multiple PE devices, so that load shared by each PE device is more balanced.

In step 201, the first PE device needs to obtain the target ESI of the target NVE device. The ESI is used to uniquely identify one NVE device in the internetwork. In the internetwork, an ESI of an NVE device is configured by a PE device connected to the NVE device. In this embodiment of this application, the first PE device may statically configure the target ESI of the target NVE device; or may first obtain an IP address of the target NVE device, and then generate the target ESI of the target NVE device according to the IP address; or may obtain from another PE device a target ESI that is configured by the another PE device for the target NVE device; or may determine the target ESI of the target NVE device in another manner. This embodiment of this application sets no limitation thereto. However, it should be noted that the ESI is used to uniquely identify one NVE device in a network. Therefore, each NVE device has merely one ESI. If the target NVE device is connected to multiple PE devices, and the multiple PE devices separately configure or generate a target ESI of the target NVE device, the multiple PE devices need to configure or generate a same target ESI for the target NVE device.

In step 203, the first PE device needs to determine whether the first PE device itself is the DF of the target NVE device in the target VN. The first PE device and the second PE device are used as an example. If the target NVE device is connected to merely the first PE device and the second PE device, the first PE device determines whether to select the first PE device from the first PE device and the second PE device as the DF of the target NVE device in the target VN. Specifically, the first PE device may determine, according to a fact that the target ESI and the target VN ID that are corresponding to the first device identifier are the same as the target ESI and the target VN ID that are corresponding to the second device identifier, that both the first PE device and the second PE device are connected to the target NVE in the target VN. Therefore, the first PE device evenly allocates the first PE device from the first PE device and the second PE device as the DF of the target NVE device in the target VN.

However, in actual application, the target NVE device in the target VN may be connected to a third PE device, a fourth PE device, or even more PE devices in addition to the first PE device and the second PE device. If the target NVE device in the target VN is further connected to the third PE device in the EVPN, similar to a processing method for the second PE device, the first PE device further receives a message from the third PE device. Because the third PE device is connected to the target NVE in the target VN, a third device identifier of the third PE device is also corresponding to the target ESI and the target VN. All the third device identifier of the third PE device, and the target ESI and the target VN ID that are corresponding to the third device identifier are carried in the message from the third PE device. The first PE device determines that all the target ESI and the target VN ID that are corresponding to the first device identifier, the target ESI and the target VN ID that are corresponding to the second device identifier, and the target ESI and the target VN ID that are corresponding to the third device identifier are the same, and therefore, determines that all the first PE device, the second PE device, and the third PE device are connected to the target NVE in the target VN. Therefore, the first PE device determines, according to the first device identifier, the second device identifier, the third device identifier, the target ESI, and the target VN ID, whether the first PE device itself is the DF of the target NVE device in the target VN. Specifically, the first PE device evenly allocates the first PE device from the first PE device, the second PE device, and the third PE device as the DF of the target NVE device in the target VN. Similarly, if the target NVE device is connected to N PE devices in total (the first PE device and the second PE device are included), the first PE device determines whether to select the first PE device from the N PE devices as the DF of the target NVE device in the target VN.

To balance load on each PE device, the first PE device needs to designate as evenly as possible DF roles of VNs accessed by the target NVE device to the PE devices. Based on this even rule, the first PE device may evenly allocate a DF to the target NVE device in the target VN by using the following steps:

Step one: The first PE device calculates i = (VN ID of the target VN)mod(N), where N is used to represent a quantity of PE devices that perform load balancing for the target NVE device in the target VN, and N is an integer not less than 2. The N PE devices are numbered from 0 to N-1 and may be specifically numbered by the first PE device, or may be numbered by the second PE device or another PE device. However, if there are at least two PE devices that perform numbering operation on the N PE devices, the PE devices that perform the numbering operation on the N PE devices need to number the N PE devices according to a same rule. That is, numbers of the N PE devices are the same regardless of which PE device performs the numbering operation on the N PE devices; i is used to represent a number of any device in the N PE devices. It may be understood that a value range of i is any integer from 0 to N-1; mod is used to represent a modulo operator.

Step two: The first PE device determines, according to a value of i obtained by means of calculation, whether the first PE device is the DF of the target NVE device in the target VN. Specifically, the value of i represents a number of the DF of the target NVE device in the target VN. In case i is equal to a number of the first PE device, it is determined that the first PE device is the DF of the target NVE device in the target VN. In case i is not equal to the number of the first PE device, it is determined that the first PE device is not the DF of the target NVE device in the target VN.

In step one, there are many methods for numbering, from 0 to N-1, the N PE devices that perform load balancing for the target NVE device. For example, the N PE devices may be numbered from 0 to N-1 in ascending or descending order of device identifiers of the N PE devices. Another method may be used to number the N PE devices, and this is not limited herein.

After step 203, when the first PE device receives a BUM packet from an EVPN side, and the BUM packet includes the target ESI and the VN ID of the target VN, if the first PE device determines that the first PE device itself is the DF of the target NVE device in the target VN, the first PE device forwards the BUM packet to the target NVE device; or if the first PE device determines that the first PE device itself is not the DF of the target NVE device in the target VN, the first PE device discards the BUM packet.

Optionally, in another embodiment of this application, near-end PE devices in the internetwork may share one IP address and use an anycast (Anycast) method to receive a message sent by a local NVE device. The first PE device and the second PE device are used as an example. The first PE device may share one IP address with the second PE device. The VN network directly sends a BUM packet to the IP address, and then the BUM packet reaches a PE device, in the first PE device and the second PE device, whose Interior Gateway Protocol path (IGP cost) is shorter. With this method, load balancing of PE devices in the internetwork can be implemented, and this avoids a case of network congestion caused because a large quantity of packets are sent to one PE device at the same time.

To better understand the foregoing embodiment, the following uses a specific application scenario of the foregoing embodiment as an example for description.

The internetwork between the VN and the EVPN includes a PE device 1, a PE device 2, and a PE device 3, and all the PE device 1, the PE device 2, and the PE device 3 are connected to the target NVE device. The target NVE device accesses a VN 1 and a VN 2.

The PE device 1 obtains an IP address of itself as a device identifier, obtains an IP address of the target NVE connected to the PE device 1 itself, and generates a target ESI of the target NVE according to the IP address of the target NVE. The PE device 1 further obtains VN IDs of the VN 1 and the VN 2 accessed by the target NVE device.

The PE device 1 receives a first message from the PE device 2. The message includes an IP address of the PE device 2, the target ESI, and the VN IDs of the VN 1 and the VN 2. After receiving the first message from the PE device 2, the PE device 1 can learn that the target NVE is also connected to the PE device 2. The PE device 1 further receives a second message from the PE device 3. The message includes an IP address of the PE device 3, the target ESI, and the VN IDs of the VN 1 and the VN 2. After receiving the second message from the PE device 3, the PE device 1 can learn that the target NVE device is also connected to the PE device 3.

After determining that the target NVE is connected to all the PE device 1, the PE device 2, and the PE device 3, the PE device 1 numbers the PE device 1, the PE device 2, and the PE device 3 from 0 to 2 according to a size sequence of IP addresses, so as to obtain a result that a number of the PE device 1 is 0, a number of the PE device 2 is 2, and a number of the PE device 3 is 1.

The PE device 1 calculates i₁ = (VN ID of the VN 1)mod 3 and obtains i₁=1. Because i₁ is different from the number of the PE device 1, the PE device 1 determines that the PE device 1 itself is not a DF of the target NVE device in the VN 1. The PE device 1 calculates i₂ = (VN ID of the VN 2)mod 3 and obtains i₂=0. Because i₂ is the same as the number of the PE device 1, the PE device 1 determines that the PE device 1 itself is a DF of the target NVE device in the VN 2.

The PE device 1 receives a BUM packet 1 from the EVPN side, and the BUM packet 1 carries the target ESI and the VN ID of the VN ID 1. Because the PE device 1 is not the DF of the target NVE in the VN 1, the PE device 1 discards the BUM packet 1. The PE device 1 further receives a BUM packet 2 from the EVPN side, and the BUM packet 2 carries the target ESI and the VN ID of the VN ID 2. Because the PE device 1 is the DF of the target NVE device in the VN 2, the PE device 1 forwards the BUM packet 2 to the target NVE device.

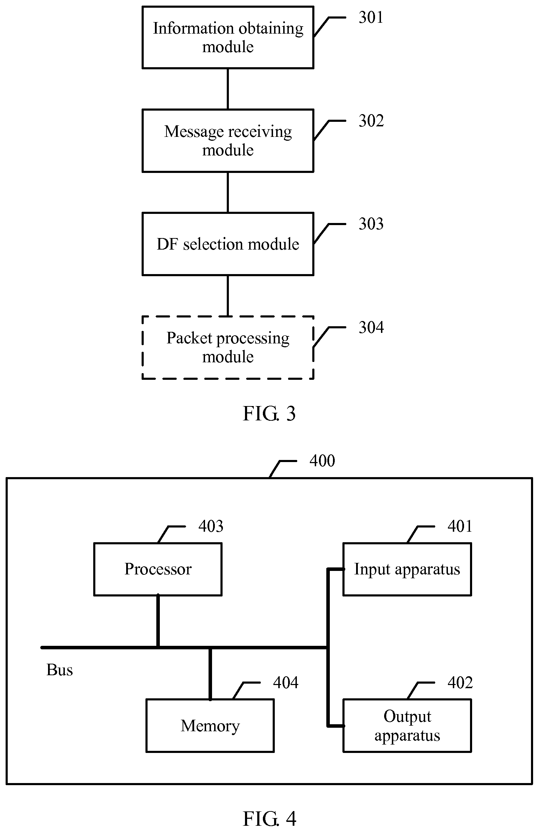

Based on the foregoing methods, an embodiment of this application further provides a related load balancing apparatus that is applicable to an internetwork between a VN and an EVPN and is used to implement the methods described above. Reference may be made to FIG. 3 for a basic structure of the apparatus, and the apparatus includes:
an information obtaining module 301, configured to implement the operation in step 201, and details are not described herein;
a message receiving module 302, configured to implement the operation in step 202, and details are not described herein; and
a DF selection module 303, configured to implement the operation in step 203, and details are not described herein.

In this embodiment, the information obtaining module 301 obtains a first device identifier of a first PE device, a target ESI that is of a target NVE device and is corresponding to the first device identifier, and a VN ID that is of a target VN accessed by the target NVE device and is corresponding to the first device identifier. The message receiving module 302 obtains, from a second PE device, a second device identifier of the second PE device, the target ESI that is of the target NVE device and is corresponding to the second device identifier, and the VN ID that is of the target VN accessed by the target NVE device and is corresponding to the second device identifier. The same target ESI and VN ID of the target VN are obtained from the second PE device. Therefore, the DF selection module 303 determines, according to the first device identifier, the second device identifier, the target ESI, and the VN ID of the target VN, whether the first PE device is a DF of the target NVE device in the target VN. Different from the prior art in which a DF is selected merely based on a VN granularity, in this embodiment, the DF is selected for the NVE device connected to multiple PE devices in the VN, so that the DF is selected based on an NVE+VN granularity. In this way, a VN accessed by one NVE device is evenly shared to multiple PE devices, so that load shared by each PE device is more balanced.

Alternatively, the information obtaining module 301 may obtain the ESI that is of the target NVE device and is corresponding to the first device identifier by using the following method: configuring the target ESI for the target NVE device; or obtaining an IP address of the target NVE device and generating the target ESI of the target NVE device according to the IP address of the target NVE device.

Alternatively, the DF selection module 303 may determine whether the first PE device is the DF of the target NVE device in the target VN by using the following method:
determining, according to a fact that the target ESI and the target VN ID that are corresponding to the first device identifier are the same as the target ESI and the target VN ID that are corresponding to the second device identifier, that both the first PE device and the second PE device are connected to the target NVE in the target VN; and evenly allocating the first PE device from the first PE device and the second PE device as the DF of the target NVE device in the target VN.

Alternatively, the DF selection module 303 may evenly allocate the first PE device as the DF of the target NVE device in the target VN by using the following method:
calculating a value of i according to a formula i = (VN ID)mod(N), where N represents a quantity of PE devices that perform load balancing for the target NVE device in the target VN, N is an integer not less than 2, i represents a number of any device in the N PE devices, the N PE devices are numbered from 0 to N-1, and mod represents a modulo operator; and in case i obtained by means of calculation is equal to a number of the first PE device, determining that the first PE device is the DF of the target NVE device in the target VN; and in case i obtained by means of calculation is not equal to a number of the first PE device, determining that the first PE device is not the DF of the target NVE device in the target VN.

Alternatively, the DF selection module 303 may number the N PE devices from 0 to N-1 by using the following method: numbering the N PE devices from 0 to N-1 in ascending or descending order of device identifiers of the N PE devices.

Alternatively, the message receiving module 302 may further receive a BUM packet from an EVPN side, where the BUM packet includes the target ESI and the VN ID of the target VN. The load balancing apparatus may further include an optional module, packet processing module 304, configured to: when the first PE device is the DF of the target NVE device in the target VN, forward the BUM packet to the target NVE device; when the first PE device is not the DF of the target NVE device in the target VN, discard the BUM packet.

The foregoing describes the load balancing apparatus in the embodiment of this application from a perspective of a unit functional entity, and the following describes the load balancing apparatus in an embodiment of this application from a perspective of hardware processing. Referring to FIG. 4, another embodiment of a load balancing apparatus 400 in an embodiment of this application includes:
an input apparatus 401, an output apparatus 402, a processor 403, and a memory 404 (there may be one or more processors 403 in the load balancing apparatus 400, and one processor 403 is used as an example in FIG. 4). In some embodiments of this application, the input apparatus 401, the output apparatus 402, the processor 403, and the memory 404 may be connected by using a bus or in another manner. In FIG. 4, that they are connected by using the bus is used as an example.

By invoking an operation instruction stored in the memory 404, the processor 403 is configured to perform the following steps:
obtaining a first device identifier of the first PE device, and obtaining a target Ethernet segment identifier ESI that is of the target NVE device and is corresponding to the first device identifier and a virtual network identifier VN ID that is of a target VN accessed by the target NVE device and is corresponding to the first device identifier, where the target ESI is used to uniquely identify the target NVE device;
receiving a message from the second PE device, where the message from the second PE device carries a second device identifier of the second PE device, and the target ESI and the VN ID of the target VN that are corresponding to the second device identifier; and
determining, according to the first device identifier, the second device identifier, the target ESI, and the VN ID of the target VN, whether the first PE device is a designated forwarder DF of the target NVE device in the target VN, where the DF is configured to forward a broadcast, an unknown unicast, or a multicast BUM packet received from an EVPN network side to the NVE device.

In some embodiments of this application, the processor 403 is further configured to perform the following steps:
configuring the target ESI for the target NVE device; or
obtaining an Internet Protocol IP address of the target NVE device and generating the target ESI of the target NVE device according to the IP address of the target NVE device.

In some embodiments of this application, the processor 403 is further configured to perform the following steps:
determining, according to a fact that the target ESI and the target VN ID that are corresponding to the first device identifier are the same as the target ESI and the target VN ID that are corresponding to the second device identifier, that both the first PE device and the second PE device are connected to the target NVE in the target VN; and
evenly allocating the first PE device from the first PE device and the second PE device as the DF of the target NVE device in the target VN.

In some embodiments of this application, the processor 403 is further configured to perform the following steps:
calculating a value of i according to a formula i = (VN ID)mod(N), where N represents a quantity of PE devices that perform load balancing for the target NVE device in the target VN, N is an integer not less than 2, i represents a number of any device in the N PE devices, the N PE devices are numbered from 0 to N-1, and mod represents a modulo operator; and
in case i obtained by means of calculation is equal to a number of the first PE device, determining that the first PE device is the DF of the target NVE device in the target VN;
in case i obtained by means of calculation is not equal to a number of the first PE device, determining that the first PE device is not the DF of the target NVE device in the target VN.

In some embodiments of this application, the processor 403 is further configured to perform the following step:
numbering the N PE devices from 0 to N-1 in ascending or descending order of device identifiers of the N PE devices.

In some embodiments of this application, the processor 403 is further configured to perform the following steps:
receiving a BUM packet from the EVPN side, where the BUM packet includes the target ESI and the VN ID of the target VN; and
in case the first PE device is the DF of the target NVE device in the target VN, forwarding the BUM packet to the target NVE device; and in case the first PE device is not the DF of the target NVE device in the target VN, discarding the BUM packet.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A load balancing method, applied to an internetwork between a virtual network VN and an Ethernet virtual private network EVPN, wherein the internetwork comprises a first provider edge PE device, a second PE device, and a target network virtualization edge NVE device, the target NVE device is separately connected to the first PE device and the second PE device, the target NVE device belongs to the VN, the first PE device and the second PE device belong to the EVPN, and the method comprises:
Obtaining, by the first PE device, a first device identifier of the first PE device, and obtaining a target Ethernet segment identifier ESI that is of the target NVE device and is corresponding to the first device identifier and a virtual network identifier VN ID that is of a target VN accessed by the target NVE device and is corresponding to the first device identifier, wherein the target ESI is used to uniquely identify the target NVE device;
Receiving, by the first PE device, a message from the second PE device, wherein the message from the second PE device carries a second device identifier of the second PE device, and the target ESI and the VN ID of the target VN that are corresponding to the second device identifier; and
Determining, by the first PE device according to the first device identifier, the second device identifier, the target ESI, and the VN ID of the target VN, whether the first PE device is a designated forwarder DF of the target NVE device in the target VN, wherein the DF is configured to forward a broadcast, an unknown unicast, or a multicast BUM packet received from an EVPN network side to the NVE device.

2. The load balancing method according to claim 1, wherein the obtaining an ESI that is of the target NVE device and is corresponding to the first device identifier comprises:
configuring the target ESI for the target NVE device; or
obtaining an Internet Protocol IP address of the target NVE device and generating the target ESI of the target NVE device according to the IP address of the target NVE device.

3. The load balancing method according to claim 1 or 2, wherein before the determining, by the first PE device according to the first device identifier, the second device identifier, the target ESI, and the VN ID of the target VN, whether the first PE device is a DF of the target NVE device in the target VN, the method further comprises:
determining, by the first PE device according to a fact that the target ESI and the target VN ID that are corresponding to the first device identifier are the same as the target ESI and the target VN ID that are corresponding to the second device identifier, that both the first PE device and the second PE device are connected to the target NVE in the target VN.

4. The load balancing method according to any one of claims 1 to 3, wherein the determining, by the first PE device according to the first device identifier, the second device identifier, the target ESI, and the VN ID of the target VN, whether the first PE device is a DF of the target NVE device in the target VN comprises:
evenly allocating, by the first PE device, the first PE device from the first PE device and the second PE device as the DF of the target NVE device in the target VN.

5. The load balancing method according to claim 4, wherein the evenly allocating, by the first PE device, the first PE device from the first PE device and the second PE device as the DF of the target NVE device in the target VN comprises:
calculating, by the first PE device, a value of i according to a formula i = (VN ID)mod(N), wherein N represents a quantity of PE devices that perform load balancing for the target NVE device in the target VN, N is an integer not less than 2, i represents a number of any device in the N PE devices, the N PE devices are numbered from 0 to N-1, and mod represents a modulo operator; and
in case i obtained by means of calculation is equal to a number of the first PE device, determining, by the first PE device, that the first PE device is the DF of the target NVE device in the target VN;
in case i obtained by means of calculation is not equal to a number of the first PE device, determining, by the first PE device, that the first PE device is not the DF of the target NVE device in the target VN.

6. The load balancing method according to claim 5, wherein that the N PE devices are numbered from 0 to N-1 comprises:
numbering, by the first PE device, the N PE devices from 0 to N-1 in ascending or descending order of device identifiers of the N PE devices.

7. The load balancing method according to any one of claims 1 to 6, wherein the method further comprises:
receiving, by the first PE device, a BUM packet from the EVPN side, wherein the BUM packet comprises the target ESI and the VN ID of the target VN; and
in case the first PE device determines that the first PE device is the DF of the target NVE device in the target VN, forwarding, by the first PE device, the BUM packet to the target NVE device;
in case the first PE device determines that the first PE device is not the DF of the target NVE device in the target VN, discarding, by the first PE device, the BUM packet.

8. A load balancing apparatus, applied to an internetwork between a virtual network VN and an Ethernet virtual private network EVPN, wherein the internetwork comprises a first provider edge PE device, a second PE device, and a target network virtualization edge NVE device, the target NVE device is separately connected to the first PE device and the second PE device, the target NVE device belongs to the VN, the first PE device and the second PE device belong to the EVPN, the apparatus is applicable to the first PE device, and the apparatus comprises:
an information obtaining module, configured to obtain a first device identifier of the first PE device, and obtain a target Ethernet segment identifier ESI that is of the target NVE device and is corresponding to the first device identifier and a virtual network identifier VN ID that is of a target VN accessed by the target NVE device and is corresponding to the first device identifier, wherein the target ESI is used to uniquely identify the target NVE device;
a message receiving module, configured to receive a message from the second PE device, wherein the message from the second PE device carries a second device identifier of the second PE device, and the target ESI and the VN ID of the target VN that are corresponding to the second device identifier; and
a DF selection module, configured to determine, according to the first device identifier, the second device identifier, the target ESI, and the VN ID of the target VN, whether the first PE device is a designated forwarder DF of the target NVE device in the target VN, wherein the DF is configured to forward a broadcast, an unknown unicast, or a multicast BUM packet received from an EVPN network side to the NVE device.

9. The load balancing apparatus according to claim 8, wherein the information obtaining module is further configured to:
configure the target ESI for the target NVE device; or
obtain an Internet Protocol IP address of the target NVE device and generate the target ESI of the target NVE device according to the IP address of the target NVE device.

10. The load balancing apparatus according to claim 8 or 9, wherein the DF selection module is further configured to:
determine, according to a fact that the target ESI and the target VN ID that are corresponding to the first device identifier are the same as the target ESI and the target VN ID that are corresponding to the second device identifier, that both the first PE device and the second PE device are connected to the target NVE in the target VN.

11. The load balancing apparatus according to any one of claims 8 to 10, wherein the DF selection module is further configured to:
evenly allocate the first PE device from the first PE device and the second PE device as the DF of the target NVE device in the target VN.

12. The load balancing apparatus according to claim 11, wherein the DF selection module is further configured to:
calculate a value of i according to a formula i = (VN ID)mod(N), wherein N represents a quantity of PE devices that perform load balancing for the target NVE device in the target VN, N is an integer not less than 2, i represents a number of any device in the N PE devices, the N PE devices are numbered from 0 to N-1, and mod represents a modulo operator; and
in case i obtained by means of calculation is equal to a number of the first PE device, determine that the first PE device is the DF of the target NVE device in the target VN;
in case i obtained by means of calculation is not equal to a number of the first PE device, determine that the first PE device is not the DF of the target NVE device in the target VN.

13. The load balancing apparatus according to claim 12, wherein the DF selection module is further configured to:
number the N PE devices from 0 to N-1 in ascending or descending order of device identifiers of the N PE devices.

14. The load balancing apparatus according to any one of claims 8 to 13, wherein the message receiving module is further configured to receive a BUM packet from the EVPN side, wherein the BUM packet comprises the target ESI and the VN ID of the target VN; and
the apparatus further comprises a packet processing module, configured to: if the first PE device is the DF of the target NVE device in the target VN, forward the BUM packet to the target NVE device; or if the first PE device is not the DF of the target NVE device in the target VN, discard the BUM packet.
